# EUROPÄISCHE PATENTANMELDUNG

(11) **EP 1 229 597 A2**
(43) Veröffentlichungstag der Anmeldung: **07.08.2002**
(21) Anmeldenummer: 01127808.2
(22) Anmeldetag: 22.11.2001
(51) Int. Cl.: H01M 4/04, H01M 4/62, H01M 4/02, H01M 4/52

(54) **Verfahren zur Herstellung von Elektrodenfolien**

(30) Priorität: 03.02.2001 DE 10104988
(71) Anmelder: Microbatterie GmbH, 30419 Hannover (DE)
(72) Erfinder: Haug, Peter, Dr., 73479 Ellwangen (DE); Birke, Peter, Dr., 73479 Ellwangen (DE); Holl, Konrad, Dr., 73434 Aalen-Dewangen (DE); Ilic, Dejan, Dr., 73479 Ellwangen (DE)
(74) Vertreter: Kaiser, Dieter Ralf, Dipl.-Ing.

(57) **Zusammenfassung**

Bei einem nasschemischen Verfahren zur Herstellung von Elektrodenfolien für galvanische Elemente, die mindestens eine Lithium-interkalierende Elektrode enthalten, welche aus einer Mischung von mindestens zwei verschiedenen fluorierten Polymeren besteht, in deren Polymermatrix im Polymer unlösliche elektrochemisch aktive Materialien fein dispergiert sind, werden mindestens zwei verschiedene fluorierte Polymere in einem Lösungsmittel gelöst und ohne Zusätze von Plastifizierer, Quellmittel oder Elektrolyt lediglich mit einem hochleitfähigen Ruß, dessen BET-Oberfläche zwischen der von oberflächenminimiertem Graphit und aktiviertem Kohlenstoff liegt und mit einem elektrochemisch aktiven Material mit einer zweidimensionalen Schichtstruktur und einer elektronischen Leitfähigkeit von mindestens 10⁻⁴ S/cm, in welches Lithium reversibel ein- und ausbaubar ist, vermischt, die so erhaltene pastöse Masse wird auf einen Elektrodenableiter oder eine Trägerfolie aufgebracht und getrocknet.

So hergestellte positive Elektrodenfolien und negative Elektrodenfolien werden auf einen Separator auflaminiert, der Stapel wird mit einem flüssigen organischen Elektrolyten getränkt und so ein galvanisches Element gebildet.

## Beschreibung

Die Erfindung betrifft ein nasschemisches Verfahren zur Herstellung von Elektrodenfolien für galvanische Elemente, die mindestens eine Lithium-interkalierende Elektrode enthalten, welche aus einer Mischung von mindestens zwei verschiedenen fluorierten Polymeren besteht, in deren Polymermatrix im Polymer unlösliche elektrochemisch aktive Materialien fein dispergiert sind, und ein galvanisches Element mit nach dem Verfahren hergestellten Elektroden.

Aus Gründen elektrochemischer Stabilität, insbesondere auf Seite der positiven Elektrode, können nur wenige Materialien als Bindemittel der elektrochemisch aktiven Massen in lithiumbasierten galvanischen Elementen zum Einsatz kommen. Neben Polyolefinen sind dies insbesondere fluorierte Polymere.

Das Dokument US 4,828,834 A1 beschreibt den Einsatz von Polytetrafluorethylen (PTFE) in einer wiederaufladbaren Zelle mit Lithium interkalierenden Elektroden. Hierbei werden nur wenige Gewichtsprozent, exemplarische Werte liegen bei 1,8 und 5 %, PTFE als Binder hinzugegeben, und man erhält die Elektroden durch Kaltverpressung bei typischen Werten von 3 t/cm².

Das Dokument US 5,631,104 A1 führt als Bindemittel für die elektrochemisch aktiven Massen ein Ethylen-Propylen-Dien-Momomer an, das zur Verarbeitung in Cyclohexan gelöst wird. Die so erhaltene Paste wird auf eine Trägerfolie aufgetragen und getrocknet.

Die Druckschrift WO 98/20566 A1 beschreibt ein Verfahren, bei dem ein Poylvinyliden-Homopolymer trocken mit einem Füllstoff wie SiO₂ oder Al₂O₃ gemischt wird. Danach wird ein Plastifizierer, beispielsweise Dimethyladipat, hinzugegeben und die zu einem Elektroden- oder Separatorgrünling vorgeformte Mischung wird in einem Heißpress- oder Schmelzverfahren über dem Erweichungspunkt aber unter dem Schmelzpunkt des Polymers verarbeitet.

Die Druckschrift US 5,296,318 A1 beschreibt die Herstellung von eigenleitfähigen Separatoren, ausgehend von einer Polyvinylidenfluorid-Hexafluorpropylen (PVDF-HFP) Kombination, die mit Elektrodenfolien laminierbar sind. Aufgrund der eingearbeiteten Elektrolytsalze sind die Separatorfolien jedoch stark hygroskopisch und können, je nach Elektrolytsalz, auch hydrolyseempfindlich unter Freisetzung von Flusssäure sein.

Nachteilig für die praktische Umsetzung solcher Verfahren sind die hohen Kosten für Trockenräume und Schutzgasatmosphären, die für den gesamten Prozess benötigt werden.

Im Dokument US 5,460,904 A1 ist ein Verfahren zur Herstellung von aktivierbaren wiederaufladbaren Lithiumikonenbatterien angegeben, bei dem elektrochemisch aktive Materialien, Zusätze wie gegebenenfalls Leitfähigkeitsverbesserer in den Elektroden oder Stabilisatoren im Separator, ein spezielles Polymer-Copolymer Polyvinylidenfluorid-Hexafluorpropylen (PVDF-HFP) sowie erhebliche Anteile eines Weichmachers, typischerweise Dibuthylphtalat (DBP), nach Hinzugabe von Aceton zum Lösen des Polymers intensiv gemischt und zu einer Folie ausgezogen werden. Diese Folien werden in mehreren Laminationsprozessen zu sogenannten Bizellen verarbeitet, mehrere Bizellen ergeben einen Stack, der nach Einlegen in beschichtete tiefgezogene Alufolie, Befüllen mit Elektrolyt, Siegeln, Formieren, Entgasen und Endsiegeln, die fertige Zelle darstellt. Der oben angeführte Plastifizierer muss dabei zuvor in einem aufwendigen Extraktionsschritt aus den Bizellen wieder vollständig entfernt werden, da er in einer geladenen Zelle elektrochemisch instabil ist und die Zelle beim ersten Ladevorgang irreversibel schädigen könnte. Dieser Extraktionsschritt ist zeit- und kostenintensiv, der rückgewonnene Plastifizierer ist in der Regel zu verunreinigt, um wiederverwendet zu werden und verursacht damit erhebliche Kosten. Die zur Extraktion vorgeschlagenen Lösemittel sind in der Regel das sehr giftige und explosive Methanol oder das nicht minder entzündliche Hexan.

Im Dokument DE 196 52 174 A1 ist vorgeschlagen, Plastifizierer zu verwenden, die elektrochemisch stabil sind und damit nicht herausgewaschen werden müssen. Die Verporung zur anschließenden Aufnahme des Elektrolyten kann hier thermisch gelöst werden, d. h., wesentliche Teile des Plastifizierers können unter Temperatur und Vakuum extrahiert werden. Ein großer Vorteil ist, dass die Extraktion des Weichmachers nicht mehr vollständig erfolgen muss. Damit ist allerdings der aufwendige Extraktionsschritt und das notwendige Recycling nicht beseitigt. Kosten entstehen weiterhin durch den Plastifizierer selbst, und der in Öfen extrahierte Plastifizierer muss aufgefangen und entsorgt werden. Dies kann zu erheblichen Verunreinigungen in den Öfenbereichen selbst, insbesondere im Bereich der Kühlzonen, führen, wo sich ganz erhebliche Menge Plastifizierer abscheiden können. Durch Sättigungseffekte in der Ofenkammer, verursacht durch den Sättigungsdruck des in der Regel schwer siedenden Plastifizierers, kann die Extraktion sogar vollständig unterbrochen werden, so dass aufwendig getrocknet werden muss, indem man die Behandlungskammer mehrfach zeitaufwendig flutet und wieder evakuiert.

Der Erfindung liegt die Aufgabe zugrunde, die bekannten Verfahren zur Herstellung von Polymerelektroden zu vereinfachen.

Die Aufgabe wird erfindungsgemäß bei dem eingangs genannten Verfahren durch die kennzeichnenden Merkmale des Anspruchs 1 gelöst. Vorteilhafte Ausgestaltungen des Verfahrens sowie galvanische Elemente mit nach dem Verfahren hergestellten Elektroden sind in den Unteransprüchen angegeben.

Das erfindungsgemäße Verfahren ermöglicht es, eine Elektrode auf der Basis von fluorhaltigen Polymeren, bevorzugt sind Mischungen von Vinilidenfluorid und Hexafluorpropylen, mit ihrer hohen elektrochemischen Stabilität in einem nasschemischen Prozess als selbstragende Folie herzustellen oder auf ein Substrat wie eine Polyesterfolie oder direkt auf eine Ableiterelektrode aufzubringen und anschließend in einem kontinuierlichen Prozess, wie er für die Herstellung von hohen Stückzahlen unabdingbar ist, zu einem Schichtverbund heiß zu verlaminieren und damit den Vorteil eines kontaktoptimierten Zellverbundes zu erhalten, der nicht mehr auf eine intrinsische Druckausübung wie bei Wickelzellen durch spezielle Wickeltechniken oder durch externen Druck durch ein starres und damit in der Regel schweres metallisches Gehäuse angewiesen ist. Beim erfindungsgemäßen Konzept werden die Folien unter normalen Umgebungsbedingungen gefertigt und erst im Rahmen der Zellhäusung wird Elektrolyt zum Schluss unter Schutzgasatmosphäre zudosiert.

Wie der eingangs genannte Stand der Technik zeigt, war man bisher generell der Meinung, dass ein Plastifizierer benötigt wird, um eine Sedimentation der festen Bestandteile beim Ausziehen der Folien zu unterbinden und die Folien im anschließenden Fertigungsprozess, der viele Umlenkrollen und mehrmaliges Auf- und Abwickeln beinhaltet, flexibel genug zu halten. Außerdem sollte der Plastifizierer als Platzhalter für das anschließende Befüllen mit Elektrolyt eine ausreichende Mikroporosität bereitstellen, so dass wesentliche Teile wieder extrahiert werden mussten. Zudem soll der Plastifizierer in den Elektroden deren Haftung am Ableiter bzw. Separator durch den Laminierungsprozess ermöglichen.

Erfindungsgemäß hat sich aber gezeigt, dass es möglich ist, ganz ohne Zusatz von Plastifizierer ausreichend flexible Folien ohne Sedimentationseffekte herzustellen und alleine durch das Abdampfen des Acetons, welches neben Methylpyrolidin-2-on als Lösungsmittel bevorzugt wird, beim Fertigungsprozess und natürliche Versprödung bzw. Alterung des Polymers eine ausreichende Mikroporosität für das anschließende Befüllen mit Elektrolyt bereitzustellen. Für die Aufnahme von Elektrolyt wirken überdies die in den Elektroden enthaltenen Leitfähigkeitsverbesserer, in der Regel Kohlenstoffe mit hohem Absorptionsvermögen, unterstützend, so dass die Porosität, nicht wie bei bekannten Verfahren, nur durch den Plastifizierer bereitgestellt werden kann. Der wesentliche Vorteil des erfindungsgemäßen Verfahrens liegt darin, dass der Plastifizierer und seine Entfernung mit allen seinen oben aufgeführten Nachteilen vollkommen wegfällt, und man den Schmelzpunkt des Polymers zur Anbindung der Elektroden an die Ableiterelektroden und den Separator nutzen kann. Sind bei diesem Schritt bereits Lithiumsalze und/oder Plastifizierer enthalten, so kommt es in der Regel zu Schmelzpunkterniedrigungen und mögliche Gasentwicklung durch Elektrolytsalzzersetzung und in der Regel verdampfenden Plastifizierer. Letzterer kann sich bei der Lamination als flüssiger Film an den Elektrodenoberflächen abscheiden und die Anbindung behindern.

Erfindungsgemäß wird durch das Verfahren, das ohne Plastifizierer nasschemisch umgesetzt werden kann, eine verporte Struktur bereitgestellt, die man anschließend mit einem flüssigen Elektrolyten befüllt. Damit bleibt das System eine Flüssigelektrolytzelle.

Der völlige Ersatz des Plastifizierers setzt solche anorganischen Stoffe oder Verbindungen als Substituent voraus, die neben den gewünschten elektrochemischen Eigenschaften auch spezielle strukturelle und mechanische Eigenschaften mit sich bringen. In Lithium-Interkalationszellen werden zur Verbesserung der elektronischen Leitfähigkeit der Elektroden ganz spezielle Ruße verwendet, die mehrere Eigenschaften auf sich vereinigen müssen. Neben einer hohen elektronischen Leitfähigkeit, die der von Graphit in Vorzugsrichtung vergleichbar ist, sollte gleichzeitig die effektive Oberfläche, also die BET-Oberfläche , so klein als möglich gehalten werden. Dies ist nötig, um die Reaktionsoberfläche mit dem flüssigen organischen Elektrolyten zu mimimieren, da die Reaktionsschicht bei ihrer Bildung irreversibel Lithium verbraucht und den Zellwiderstand als Funktion ihrer Dicke erhöht. Mit oberflächenminimierten Graphiten lassen sich vergleichbar niedrigere Oberflächenwerte erreichen. Graphite selbst sind aber trotz der niedrigen BET-Oberfläche in der negativen Elektrode zur Leitfähigkeitsverbesserung ungeeignet, da sie Lithium interkalieren und dabei an ihrer Oberfläche eine lediglich ionenleitende Passivierungsschicht; SEI, "solid electrolyte interface", als Reaktionsprodukt mit dem flüssigen organischen Lithiumelektrolyten ausbilden. Ebenso sind Graphite nicht in der Lage, eine bestimmte Menge von flüssigem Elektrolyten zu speichern. Ein erfindungsgemäß geeigneter Ruß hingegen besitzt zusätzlich diese vorteilhafte Speichereigenschaft und kann die Menge an Elektrolyt in den Elektroden und dadurch die lonenleitfähigkeit der Elektroden erhöhen. Die Gitterstruktur eines solchen Rußes ist so ausgelegt, dass Lithium kaum interkaliert werden kann und damit keine zur Situation bei Graphit vergleichbare SEI gebildet wird. Die mechanischen Eigenschaften von Folien werden durch solche Ruße in vorteilhafter Weise verbessert, dies macht sie als Ersatz für Plastifizierer äußerst geeignet.

Erfindungsgemäß geeignete Ruße besitzen eine BET-Oberfäche von 50-500 m²/g, bevorzugt von 50-150 m²/g und insbesondere von 50-80 m²/g, sowie eine Mindestleitfähigkeit von 10³ S/cm. Die Schüttdichte sollte im Bereich von 0,05-0,30 g/cm³ liegen und die Flüssigkeitsaufnahme 1-20 ml/g, bevorzugt 5-10 ml/g betragen. Der Ruß lässt sich gleichermaßen in positiver und negativer Elektrode einsetzen und zwar in einer Menge von 0,1 und 20 Gewichtsprozent, bevorzugt von 2 und 6 und insbesondere von 2 - 2,5 Gewichtsprozent (negative Seite) und von 4,5 - 5,5 Gewichtsprozent (positive Seite). Die Angaben beziehen sich auf den gesamten Pastenansatz incl. Lösemittel. (Derartige Ruße werden unter dem Handelsnamen Super P von Sedema oder Keitjen Black vertrieben.)

Generell sind Materialien mit Schichtstruktur wie Graphit oder LiCoO₂ mechanisch in hervorragender Weise geeignet, den Plastifizierer zu substituieren. Dies lässt sich mit der Gleitwirkung des Graphits veranschaulichen. Graphit wird aus den erwähnten Gründen nur in der positiven Elektrode zum Einsatz kommen. Hierbei ist deutlich von Graphiten zur Leitfähigkeitsverbesserung in der positiven Elektrode und Graphiten zum Einsatz als aktives Lithium interkalierendes Material in der negativen Elektrode zu unterscheiden. Graphite zum Einsatz als Leitfähigkeitsverbesserer sind in der Regel sehr fein bei Korngrößen bis hinunter zu wenigen Mikrometern, und ihre Eigenschaft, Lithium reversibel zu interkalieren, ist schlecht im Sinne einer zu hohen irreversiblen Aufnahme von Lithium, insbesondere während des ersten Halbzyklus, während Graphite zum Einsatz als aktives Material in der negativen Elektrode Korngrößen von mindestens 20 Mikrometer, vorteilhaft im Bereich von 35-50 Mikrometer, aufweisen müssen und zusätzlich aufgrund ihrer speziellen Struktur und Oberfläche ihre Eignung als aktives Material besitzen.

LiCoO₂ steht beispielhaft für Li-Me-O Verbindungen, Me bezeichnet hier Übergangsmetalle, der Sauerstoff kann zur Erhöhung der elektrochemischen Stabilität durch Fluor substituiert sein, strukturstabilisierende Hauptgruppenelemente wie Mg oder Al können vorteilhaft sein. Diese können die elektrochemische Hochtemperaturbeständigkeit in der Zelle vorteilhaft beeinflussen. Diese Verbindungen werden aus elektrochemischen Gründen, ihrer Potentiallage gegen Lithium, nur in der positiven Elektrode eingesetzt. Allgemein sind für als elektrochemisch aktives Material für eine positive Elektrodenfolie Materialien aus der Gruppe ternärer (Li-Me1-O) oder quaternärer (Li-Me1-Me2-O) Lithiumübergangsmetalloxide, wobei Me 1 und Me 2 aus einer Gruppe Ti, V, Cr, Fe, Mn, Ni, Co ausgewählt sind, geeignet, wobei die Verbindung gegebenenfalls zusätzlich bis zu 15 Atom-Prozent Mg, Al, N oder F zur Stabilisierung der Struktur enthält.

Als elektrochemisch aktives Material der negativen Elektrodenfolie wird eine graphitisierte Kohlenstoffmodifikation verwendet.

Reaktionsprodukte mit dem flüssigen organischen Elektrolyten in der geladenen Zelle wie Li₂CO₃ oder LiOH werden auch auf der positiven Seite vermutet, erfindungsgemäß wird daher das aktive Lithium-interkalierende Material als Substituent für den Plastifizierer in der positiven, eine BET-Oberfläche von 0,1-2 m²/g, einen basischen pH von 9-11,5 sowie eine Partikelgröße von 1-50 Mikrometer besitzen. Gegebenenfalls sind eine Oberflächenbehandlung mit Li₂CO₃ oder LiOH vorgenommen. Bei diesen Materialien ist eine Schüttdichte von 1,9-2,6 g/cm³, eine Dichte von 3,8-4,3 g/cm³ typisch. Bevorzugte Mengen liegen bei 0,1-25 Gewichtsprozent, bevorzugt 5-20 und ganz bevorzugt bei 10-15 Gewichtsprozent. Die Angaben beziehen sich auf den gesamten Pastenansatz incl. Lösemittel. LiCoO₂ weist sehr gute elektrochemische Eigenschaften auf mit einem Verhältnis Li/Co von 0,98 bis 1,05 und einer Herstellungstemperatur von mindestens bei 650° C.

Der Lösemittelgehalt in der Paste zur Herstellung der Folien sollte bei 50-75 Gewichtsprozent, bevorzugt bei 55-75 Gewichtsprozent und ganz bevorzugt bei 57,5-62,5 Gewichtsprozent liegen.

Das PVDF/HPF-Verhältnis bei positiven Elektrodenfolien liegt zwischen maximal 99,5 und minimal 0,5, vorzugsweise zwischen maximal 80 und minimal 20, und das Verhältnis der Molekulargewichte liegt zwischen PFDF/HFP zwischen 3,2 und 2,8, vorzugsweise zwischen 2,3 und 2,5. Das PVDF/HFP-Verhältnis für negative Elektrodenfolien liegt zwischen maximal 99,5 und minimal 0,5, vorzugsweise zwischen maximal 85 und minimal 15, und das Verhältnis der Molekulargewichte liegt zwischen PFDF/HFP zwischen 3,2 und 2,8, vorzugsweise zwischen 2,3 und 2,5. Die Dichte liegt zwischen 1,6 und 1,9 g/cm³, bevorzugt zwischen 1,7 und 1,8 g/cm³ und ganz bevorzugt bei 1,78 g/cm³, der Schmelzpunkt über 130° C, bevorzugt über 145° C und ganz bevorzugt bei 154-155° C, die Schmelzenthalphie bei 40-55 J/g, bevorzugt bei 44-46 J/g.

Die Viskosität der Ausgangspaste liegt zwischen 0,1 und 15 Pascal, bevorzugt bei 1 - 10 Pascal und insbesondere bei 3 - 6 Pascal.

### Beispiel 1

Für die Herstellung der Anode werden 250 ml Aceton zusammen mit 27,8 g PVDF-HFP (Powerflex, Elf Atochem) im 500 ml Erlenmeyerkolben vorgelegt und im Wasserbad auf 42° C erwärmt. Mit einem IKA Mischer wird gerührt, bis das Polymer vollständig gelöst ist. Dann werden 6,2 g Leitruß (Super P, Sedema) und 275,3 g Kugelgraphit (MCMB 25-28, Osaka Gas) hinzugegeben und 2 h gerührt. Die Drehstufe ist dabei so stark eingestellt, dass gerade noch keine Luft untergerührt wird.

Für die Kathode wird nach dem gleichen Schema verfahren, auf 250 ml Aceton kommen hier 24,8 g PVDF-HFP (Powerflex, Elf Atochem), 2,6 g Leitruß (Super P, Sedema), 2,6 g Graphit (KS 6, Timcal) als Leitfähigkeitsverbesserer sowie 276,2 g Litihumcobaltoxid (FMC).

Anode und Kathode werden mit einem Flächengewicht von 19-21 g/cm² mittels Tape-Casting hergestellt. Mylar (Polyester) dient als Trägerfolie. Die Anode wird anschließend auf eine Kupferfolie bei einer Temperatur von 160° C und einem Anpressgewicht von 45 kg auflaminiert. Die effektive Breite bei der Rollenlamination sind dabei 6 cm. Für die Kathode lauten die Parameter 165° C und 35 kg. Aus den so laminierten Streifen werden Anoden und Kathoden mit einer aktiven Fläche von ca. 6 x 3 cm² ausgestanzt und diese zu Bizellen (Kathode/Separator/Anode/Separator/Kathode) laminiert.

Der Separator ist dreilagig (PP/PE/PP) und mit einer dünnen PVDF-HFP Schicht versehen. Zunächst wird der Separator bei 130 ° C und 10 kg beidseitig auf die Anode laminiert, und dann werden in einem zweiten Laminationsschritt bei gleichen Parametern die obere und untere Kathode auflaminiert. Die effektive Breite ist hierbei 3 cm.

### Beispiel 2

Es wird wie bei Beispiel 1 verfahren, nur wird die Anode hierbei direkt auf die Kupferfolie gecastet.

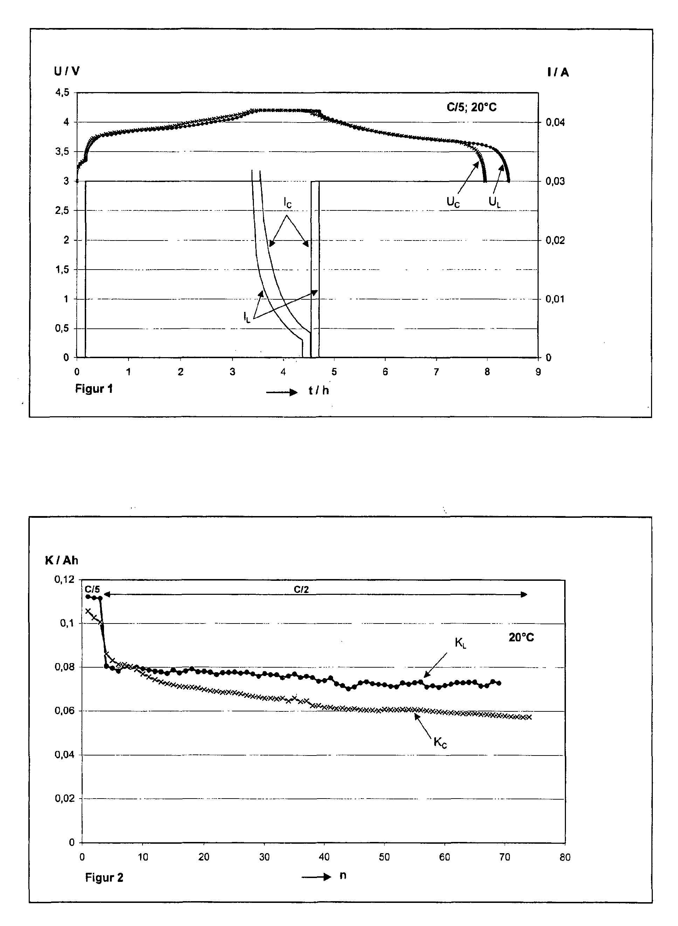

In Figur 1 ist der Verlauf von Entladespannung und Elektrodenstrom bei einer erfindungsgemäßen Zelle bei Belastung mit C/5 dargestellt. Dabei ist mit I_{L} bzw. U_{L} Strom und Spannung bei durch Laminieren hergestellten Elektroden (Beispiel 1); mit I_{C} bzw. U_{C} Strom und Spannung bei durch direktes Aufgießen (Beispiel 2) hergestellten Elektroden bezeichnet.

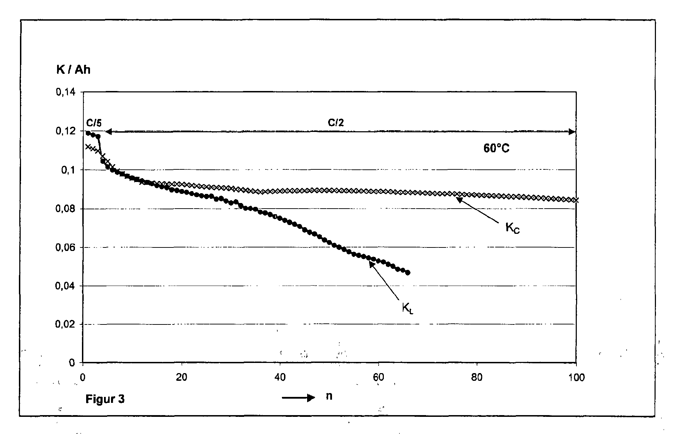

Die Figuren 2 und 3 zeigen den Kapazitätsverlauf K in Abhängigkeit von der Zyklenzahl n bei Temperaturen von 20°C (Figur 2) und 60°C (Figur 3) und Strömen von C/2. Bei einigen Anfangszyklen beträgt der Belastungsstrom C/5.

Mit K_{L} sind die Messwerte für laminierte Elektroden (Beispiel 1) und K_{C} Messwerte für direkt auf den Ableiter aufgegossene Elektroden bezeichnet.

## Patentansprüche

1. Nasschemisches Verfahren zur Herstellung von Elektrodenfolien für galvanische Elemente, die mindestens eine Lithium-interkalierende Elektrode enthalten, welche aus einer Mischung von mindestens zwei verschiedenen fluorierten Polymeren besteht, in deren Polymermatrix im Polymer unlösliche elektrochemisch aktive Materialien fein dispergiert sind, **dadurch gekennzeichnet, dass** mindestens zwei verschiedene fluorierte Polymere in einem Lösungsmittel gelöst und ohne Zusätze von Plastifizierer, Quellmittel oder Elektrolyt lediglich mit einem hochleitfähigen Ruß, dessen BET-Oberfläche zwischen der von oberflächenminimiertem Graphit und aktiviertem Kohlenstoff liegt und mit einem elektrochemisch aktiven Material mit einer zweidimensionalen Schichtstruktur und einer elektronischen Leitfähigkeit von mindestens 10⁻⁴ S/cm, in welches Lithium reversibel ein- und auszubaubar ist, vermischt werden, die so erhaltene pastöse Masse auf einen Elektrodenableiter oder eine Trägerfolie aufgebracht und getrocknet wird.

2. Verfahren nach Anspruch 1, **dadurch gekennzeichnet, dass** als Polymere Vinilidenfluorid und Hexafluorpropylen verwendet werden.

3. Verfahren nach Anspruch 1 oder 2, **dadurch gekennzeichnet, dass** als Lösungsmittel N-Methylpyrolidin-2-on oder Aceton verwendet werden.

4. Verfahren nach einem der Ansprüche 1 bis 3, **dadurch gekennzeichnet, dass** als elektrochemisch aktives Material für eine positive Elektrodenfolie ein Material aus der Gruppe ternärer (Li-Me1-O) oder quaternärer (Li-Me1-Me2-O) Lithiumübergangsmetalloxide, wobei Me 1 und Me 2 aus einer Gruppe Ti, V, Cr, Fe, Mn, Ni, Co ausgewählt sind, verwendet wird und die Verbindung gegebenenfalls zusätzlich bis zu 15 Atom-Prozent Mg, Al, N oder F zur Stabilisierung der Struktur enthält.

5. Verfahren nach einem oder mehreren der Ansprüche 1 bis 3, **dadurch gekennzeichnet, dass** als elektrochemisch aktives Material der negativen Elektrodenfolie eine graphitisierte Kohlenstoffmodifikation verwendet wird.

6. Verfahren nach einem oder mehreren der Ansprüche 1 bis 5, **dadurch gekennzeichnet, dass** als aktives Material der positiven Elektrodenfolie ein Material mit einer BET-Oberfläche von 0,1 - 2 m²/g und einer Partikelgröße von 1 bis 50 um verwendet wird.

7. Verfahren nach einem oder mehreren der Ansprüche 1 bis 6, **dadurch gekennzeichnet, dass** als Material der positiven Elektrode LiCoO2 verwendet wird, mit einem Verhältnis Li/Co von 0,98 bis 1,05.

8. Verfahren nach einem oder mehreren der Ansprüche 1 bis 6, **dadurch gekennzeichnet, dass** die BET-Oberfläche des Rußes zwischen 30 und 150 m²/g vorzugsweise zwischen 50 bis 80 m²/g liegt und dass die die Flüssigkeitsaufnahme des Rußes zwischen 1 - 20, vorzugsweise zwischen 5 - 10 ml/g beträgt.

9. Verfahren nach einem oder mehreren der Ansprüche 1 bis 8, **dadurch gekennzeichnet, dass** die Pastenmischung für negative Elektrodenfolien zwischen 55 und 95 Gew.% und vorzugsweise 65 bis 85 Gew.% an Kohlenstoffmaterial enthält.

10. Verfahren nach einem oder mehreren der Ansprüche 1 bis 9, **dadurch gekennzeichnet, dass** die Pastenmischung für positive Elektrodenfolien zwischen 65 bis 98 Gew.%, vorzugsweise 75 bis 95 Gew.% eines Lithiumübergangsmetalloxids enthält.

11. Verfahren nach einem oder mehreren der Ansprüche 1 bis 10, **dadurch gekennzeichnet, dass** die Pastenmischung 50 bis 75 Gew%., vorzugsweise 55 bis 65 Gew.% Lösungsmittel enthält.

12. Verfahren nach einem oder mehreren der Ansprüche 1 bis 11, **dadurch gekennzeichnet, dass** das PVDF/HPF-Verhältnis bei positiven Elektrodenfolien zwischen maximal 99,5 und minimal 0,5, vorzugsweise zwischen maximal 80 und minimal 20 liegt, und dass das Verhältnis der Molekulargewichte zwischen PFDF/HFP zwischen 3,2 und 2,8, vorzugsweise zwischen 2,3 und 2,5 liegt.

13. Verfahren nach einem oder mehreren der Ansprüche 1 bis 12, **dadurch gekennzeichnet, dass** das PVDF/HFP-Verhältnis für negative Elektrodenfolien zwischen maximal 99,5 und minimal 0,5 liegt, vorzugsweise zwischen maximal 85 und minimal 15 liegt, und dass das Verhältnis der Molekulargewichte zwischen PFDF/HFP zwischen 3,2 und 2,8, vorzugsweise zwischen 2,3 und 2,5 liegt.

14. Verfahren nach einem oder mehreren der Ansprüche 1 bis 13, **dadurch gekennzeichnet, dass** die Viskosität der Ausgangspaste auf 1 bis 10 Pascal, vorzugsweise 3 bis 6 Pascal eingestellt wird.

15. Galvanisches Element mit mindestens einer Elektrodenfolie, die nach einem Verfahren gemäß einem der Ansprüche 1 bis 12 hergestellt ist.

16. Galvanisches Element nach Anspruch 15, **dadurch gekennzeichnet, dass** positive Elektrodenfolie und negative Elektrodenfolie, die gemäß einem Verfahren nach einem der Ansprüche 1 bis 12 hergestellt sind auf einen Separator auflaminiert sind und der Stapel mit einem flüssigen organischen Elektrolyten getränkt ist.
